# EUROPÄISCHE PATENTSCHRIFT

(11) **EP 2 356 414 B1**
(45) Veröffentlichungstag und Bekanntmachung des Hinweises auf die Patenterteilung: **12.10.2016**
(21) Anmeldenummer: 09752758.4
(22) Anmeldetag: 29.09.2009
(51) Int. Cl.: G01J 5/00, G01J 5/04, G01J 5/08, G01J 5/10

(54) **INFRAROTLICHTDETEKTOR UND HERSTELLUNG DESSELBEN**
INFRARED LIGHT DETECTOR AND PRODUCTION THEREOF
DÉTECTEUR DE LUMIÈRE INFRAROUGE ET SON PROCÉDÉ DE FABRICATION

(30) Priorität: 24.10.2008 DE 102008053083
(43) Veröffentlichungstag der Anmeldung: 17.08.2011
(73) Patentinhaber: Pyreos Ltd., EH9 3JF Edinburgh (GB)
(72) Erfinder: GIEBELER, Carsten, Edinburgh EH4 6HD (GB)
(74) Vertreter: Fischer, Ernst
(86) Internationale Anmeldenummer: PCT/EP2009/062632
(87) Internationale Veröffentlichungsnummer: WO 2010/046213

(56) Entgegenhaltungen:
- DE-A1-102004 002 163
- DE-A1-102004 031 315
- US-A1- 2003 141 455
- US-A1- 2003 173 499
- US-A1- 2008 202 209
- US-B1- 6 222 454
- KWA T A ET AL: "Integrated grating/detector array fabricated in silicon using micromachining techniques" SENSORS AND ACTUATORS A, ELSEVIER SEQUOIA S.A., LAUSANNE, CH, Bd. 31, Nr. 1-3, 1. März 1992 (1992-03-01), Seiten 259-266, XP026556592 ISSN: 0924-4247 [gefunden am 1992-03-01]

## Beschreibung

Die Erfindung betrifft einen Infrarotlichtdetektor, ein Verfahren zur Herstellung des Infrarotlichtdetektors und die Verwendung des Infrarotlichtdetektors als Sensor zum Detektieren von Gas.

Zum Detektieren von Gas ist es bekannt Infrarotlicht zu verwenden, das in einem Wellenlängenbereich von 3 bis 5 µm liegt. Mit einer Lichtquelle, die geeignet ist, das Infrarotlicht in diesem Wellenlängenbereich zu emittieren, wird das zu detektierende Gas bestrahlt, wobei ein Anteil des Infrarotlichts von dem Gas absorbiert wird, so dass ein Restlicht verbleibt. Das Restlicht kann mit einem Infrarotlichtsensor gemessen werden, mit dem der Wellenlängenbereich und/oder die Intensität des Restlichts erfassbar und entsprechend in ein elektrisches Signal umwandelbar ist. Auf Basis des elektrischen Signals kann bei einer geeigneten Auswertung auf die Art und auf den Gehalt des detektierten Gases geschlossen werden.

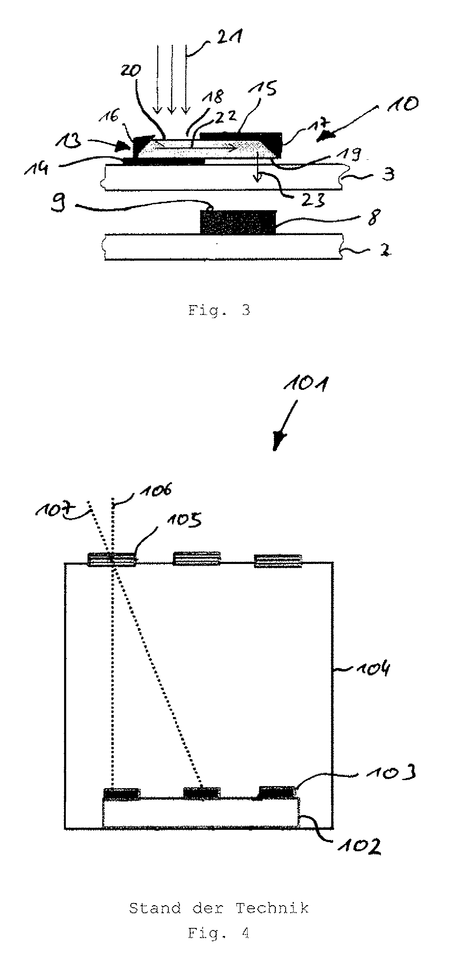

In Fig. 4 ist ein herkömmlicher Infrarotlichtsensor 101 gezeigt, der ein Substrat 102 aufweist, das beispielsweise aus einem Silikon-Wafer gewonnen ist. Auf dem Silikon-Wafer sind in einer Rasteranordnung mehrere Sensorchips 103 angebracht. Ferner weist der Infrarotlichtsensor 101 ein topfförmiges TO-Gehäuse 104 auf, das das Substrat 102 mit den Sensorchips 103 abdeckt, so dass mit dem TO-Gehäuse 104 die Sensorchips 103 von der Umgebung abgeschlossen sind. Über jedem Sensorchip 102 ist in der Oberseite des TO-Gehäuses 104 ein Filter 105 eingebaut, der als ein Infrarotlichtfilter ausgebildet ist.

Gemäß Fig. 4 sind in dem Infrarotlichtsensor 101 drei Sensorchips 103 mit ihren Filtern 105 vorgesehen, wobei ein linkes Sensorchip-Filter-Paar, ein mittleres Sensorchip-Filter-Paar und ein rechtes Sensorchip-Filter-Paar dargestellt sind.

Der linke Filter 105 ist derart eingerichtet, dass er Licht mit derjenigen Wellenlänge ausblendet, das von einer Gasart A absorbiert wird. Entsprechend ist der mittlere Filter 105 für eine Gasart B und der rechte Filter 105 für eine Gasart C ausgelegt. Besteht das zu detektierende Gas aus der Gasart A und trifft das Restlicht des zu detektierenden Gases auf das TO-Gehäuse 104, so tritt das Restlicht durch die Filter 105 in das Innere des TO-Gehäuses 104. Dabei wird von dem Restlicht durch den linken Filter 105 kein Lichtanteil herausgefiltert, wohingegen von dem mittleren Filter 105 und dem rechten Filter 105 ein entsprechender Lichtanteil herausgefiltert wird. Somit trifft das durch den rechten Filter 105 hindurchgetretene Restlicht ungefiltert auf den rechten Sensorchip 103, der dadurch voll anspricht. Hingegen sprechen der mittlere Sensorchip 103 und der rechte Sensorchip 103 nicht voll an, da das durch die ihnen zugeordneten Filter 105 hindurchgetretene Licht durch die Filterwirkung der Filter 105 entsprechend abgeschwächt ist. Daraus ergibt sich aus dem individuellen Ansprechen der Sensorchips 103 eine Detektion des Gastyps A.

Das durch den linken Filter 105 hindurchtretende Restlicht ist in Fig. 4 von einem ersten Lichtstrahl 106 und einem zweiten Lichtstrahl 107 begrenzt dargestellt. Aufgrund einer Streuungswirkung des rechten Filters 105 auf das durch ihn tretende Restlicht und/oder durch eine systembedingte Variation des Gasdetektorsystems bilden die Lichtstrahlen 106 und 107 ein sich von dem rechten Filter 105 zu den Sensorchips 103 sich auffächerndes Lichtbündel. Daraus ergibt sich auf dem Substrat 102 eine von den Lichtstrahlen 106 und 107 eingeschlossene Bestrahlungsfläche. Es ist wünschenswert, dass der rechte Sensorchip 103 und der mittlere Sensorchip 103 außerhalb der Bestrahlungsfläche liegen, da ein Bescheinen von beispielsweise des mittleren Sensorchips 103, wie es in Fig. 4 gezeigt ist, zu fehlinterpretiertem Ansprechen der Sensorchips 103 führen kann.

Herkömmlich ist das TO-Gehäuse 104 aus Metall hergestellt. Die Höhe des TO-Gehäuses 104 beträgt fertigungsbedingt 1 bis 2 mm. Daraus ergibt sich ein notwendiger Minimalabstand zwischen den einzelnen Sensorchips 103 von 0,1 bis 1 mm, damit beispielsweise der mittlere Sensorchip 103 außerhalb der Bestrahlungsfläche des linken Sensorchips 103 liegt. Daraus resultiert eine große Baubreite der Anordnung der Sensorchips 103, wodurch die Abmaße des Substrats 102 entsprechend groß vorgesehen werden müssen. Somit hat der Infrarotlichtsensor 101 ein großes Bauvolumen und ist aufgrund des hohen Materialeinsatzes beim Substrat 102 kostenintensiv in der Herstellung. Alternativ könnte der Infrarotlichtsensor 101 mit nur einem Sensorchip-Filter-Paar ausgestattet sein, so dass zum Detektieren von mehreren Gasarten mehrere derartige Infrarotlichtsensoren 101 notwendig wären. Hierbei sind allerdings die Verbauungskosten der Infrarotlichtsensoren 101 hoch.

In US 2003/0141455 A1, US 2008/0202209 A1, DE 10 2004 002 163 A1, DE 10 2004 031 315 A1, US 2003/0173499 A1, T. A. Kwa und R.F. Wolffenbuttel in Sensors and Actuators A, 31 (1992) 259-266 und US 6,222,454 B1 sind verschiedene optische Sensoren offenbart.

Aufgabe der Erfindung ist es, einen Infrarotlichtdetektor und eine Verwendung des Infrarotlichtdetektors zu schaffen, wobei der Infrarotlichtdetektor einen kleinen Bauraum hat und kostengünstig in der Herstellung ist.

Der erfindungsgemäße Infrarotlichtdetektor weist ein erstes Substrat, das einen Sensorchip mit einer Bestrahlungsfläche aufweist, die mit Infrarotlicht bestrahlbar ist, das von dem Sensorchip in ein elektrisches Signal umwandelbar ist, und ein zweites Substrat auf, das ein Fenster aufweist, das unmittelbar benachbart zu der Bestrahlungsfläche angeordnet ist und eingerichtet ist, Infrarotlicht von einer vorbestimmten Wellenlänge auszublenden, wobei die Abmaße des Fensters und dessen Abstand zur Bestrahlungsfläche derart dimensioniert sind, dass das von dem Fenster durchgelassene Infrarotlicht vollständig auf den Sensorchip trifft.

Das zweite Substrat kann in einem kleinen Abstand unmittelbar über dem ersten Substrat angebracht sein wodurch das Fenster nahe unmittelbar benachbart zu dem Sensorchip angeordnet ist. Dadurch ist die Strecke von Licht, das durch das Fenster hindurchgetreten ist, zu dem Sensorchip klein, so dass der von

Streulicht beschienene Bereich des ersten Substrats klein ist. Dadurch weist vorteilhaft der erfindungsgemäße Infrarotlichtdetektor eine geringe Baugröße auf. Ferner ist der Infrarotlichtdetektor mit seinen beiden Substraten einfach und kostengünstig in seiner Herstellung.

Erfindungsgemäß wird der Infrarotlichtdetektor als Sensor zum Detektieren von Gas verwendet.

Das Fenster ist bevorzugt auf der dem ersten Substrat abgewandten Oberseite des zweiten Substrats angeordnet, wobei vorteilhaft der Abstand zwischen dem Fenster und der Bestrahlungsfläche zwischen 10 und 700 µm liegt.

Das Fenster ist erfindungsgemäß ein Infrarotlichtfilter gebildet von einem diffraktiv-optischen Element. Die mehrschichtige Infrarotabsorptionsschicht ist eine Schichtanordnung, die mit Fotolithografie oder Laserablation von dünnen Filmschichten strukturiert werden kann und mit kommerziell bekannten Verfahren auf dem Substrat aufgebracht werden kann. Das diffraktiv-optische Element weist erfindungsgemäß eine Dielektrikschicht auf, in die eine Struktur geätzt ist, deren Dimension etwa ein Viertel der Wellenlänge des Lichts beträgt, die von dem diffraktiv-optischen Element gefiltert wird. Der Anteil des Lichts mit einer Wellenlänge, der durch das diffraktiv-optische Element nicht passierbar ist, wird an der Metallschicht reflektiert.

Das erste Substrat und/oder das zweite Substrat sind aus einem Silikon-Wafer und/oder einem Saphir hergestellt. Dadurch ist der Infrarotlichtdetektor mit seinen Substraten vorteilhaft im Rahmen der Möglichkeiten der Halbleiterfertigung herstellbar.

Das erste Substrat weist eine Mehrzahl von Sensorchips und das zweite Substrat weist eine Mehrzahl von Fenstern auf, wobei zu jedem der Sensorchips jeweils dazugehörig eines der Fenster ausgerichtet ist und die Sensorchips und ihre Fenster in einer Rasteranordnung angeordnet sind.

Dadurch, dass der Abstand zwischen dem Fenster und der Bestrahlungsfläche zwischen 10 und 700 µm liegt, ist der von Streulicht beschienene Bereich des ersten Substrats vorteilhaft gering. Somit können die Sensorchips auf dem ersten Substrat dicht aneinanderliegend angeordnet sein, ohne dass Licht, das durch eines der Fenster getreten ist, auf einen der Sensorchips trifft, die nicht diesem Fenster zugeordnet sind. Somit ist der Infrarotlichtdetektor mit einer hohen räumlichen Dichte an Sensorchips zu versehen, obwohl die Sensorchips bezüglich ihres Ansprechens keine Unschärfe haben. Außerdem sind bezogen auf die Anzahl der auf dem ersten Substrat vorgesehenen Sensorchips die Größe des ersten Substrats und die des zweiten Substrats klein, so dass der Materialverbrauch bei der Herstellung der Substrate aus dem Silikon-Wafer gering ist. Dadurch ist die Herstellung des Infrarotlichtdetektors kostengünstig.

Die Fenster sind bevorzugt eingerichtet Infrarotlicht von einer jeweils unterschiedlichen, vorherbestimmten Wellenlänge auszublenden. Dadurch wird von den Fenstern zu den Sensorchips Infrarotlicht mit den unterschiedlichen Wellenlängen durchgelassen, so dass die Sensorchips bei einer diversen Infrarotlichtzusammensetzung entsprechend ansprechen.

Das zweite Substrat ist bevorzugt an das erste Substrat gebondet. Dadurch weist der Infrarotlichtdetektor eine stabile mechanische Verbindung zwischen dem ersten Substrat und dem zweiten Substrat auf, wobei das Substrat in nur geringem Abstand von dem ersten Substrat angeordnet ist.

Der Infrarotlichtdetektor weist erfindungsgemäß ein drittes Substrat auf, das an der dem zweiten Substrat abgewandten Seite des ersten Substrats angeordnet ist. Das dritte Substrat weist bevorzugt eine Auswerteschaltung zur Auswertung eines elektrischen Signals des Sensorchips auf. Durch die Auswerteschaltung ist ein Ansprechen des Sensorchips auswertbar, das zu dem elektrischen Signal des Sensorchips führt. Die Auswerteschaltung ist bevorzugt in dem dritten Substrat integriert und/oder außerhalb des dritten Substrats angesiedelt. Ist die Auswerteschaltung in dem dritten Substrat integriert angeordnet, so hat der Infrarotlichtdetektor einen kompakten Aufbau. Ferner ist es bevorzugt, dass das dritte Substrat aus einem Silikon-Wafer hergestellt ist.

Das diffraktiv-optische Element weist erfindungsgemäß eine Dieelektrikschicht und ein die Dieelektrikschicht einhausendes, innen reflektierend ausgestaltetes Gehäuse auf, das an der dem Sensorchip abgewandten Seite eine Eintrittsöffnung und an der dem Sensorchip zugewandten Seite eine Austrittsöffnung aufweist, die bezogen auf die Eintrittsöffnung derart versetzt angeordnet ist, dass der Anteil des durch die Eintrittsöffnung eingetretenen Infrarotlichts, der nicht in die Dieelektrikschicht einkoppelbar ist, vollständig von dem Gehäuse durch die Eintrittsöffnung zurück reflektierbar ist, sowie mindestens eine Seitenwand aufweist, die derart geneigt angeordnet ist, dass der Anteil des durch die Eintrittsöffnung eingetretenen Infrarotlichts, der in die Dieelektrikschicht einkoppelbar ist, von der mindestens einen Seitenwand durch die Austrittsöffnung zu dem Sensorchip hin reflektierbar ist.

Im Folgenden werden bevorzugte Ausführungsformen eines erfindungsgemäßen Infrarotlichtdetektors anhand der beigefügten schematischen Zeichnungen erläutert. Es zeigt:
Fig. 1 einen Querschnitt einer beispielhaften Ausführungsform des Infrarotlichtdetektors,
Fig. 2 einen Querschnitt einer erfindungsgemäßen Ausführungsform des Infrarotlichtdetektors,
Fig. 3 einen Ausschnitt der Ausführungsform aus Fig. 2, wobei das Fenster und ein diffraktiv-optisches Element ist, und Fig. 4 einen Querschnitt eines herkömmlichen Infrarotlichtsensors.

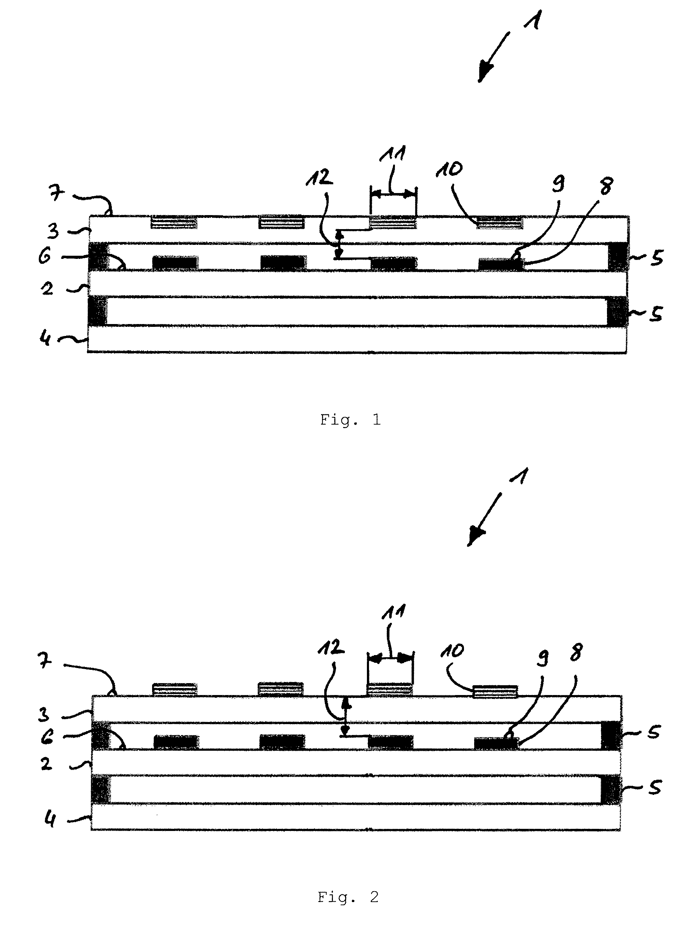

Wie es aus Fig. 1 ersichtlich ist, weist ein Infrarotlichtdetektor 1 ein erstes Substrat 2 auf, das als eine Platte ausgebildet ist. Ferner weist der Infrarotlichtdetektor 1 ein zweites Substrat 3 auf, das die gleichen Abmaße als das erste Substrat 2 hat und im Abstand in Fig. 1 gesehen oberhalb des ersten Substrats 2 angeordnet ist. In Fig. 1 gesehen unterhalb des ersten Substrats ist im Abstand dazu ein drittes Substrat 4 vorgesehen, das die gleichen Abmaße als das erste Substrat 2 hat. An ihren Außenrändern sind sowohl das zweite Substrat 3 als auch das dritte Substrat 4 mittels einer gebondeten Befestigung 5 an dem ersten Substrat 2 festgelegt, so dass zwischen dem ersten Substrat 2 und dem zweiten Substrat 3 ein Hohlraum und zwischen dem ersten Substrat 2 und dem dritten Substrat 4 ein anderer Hohlraum ausgebildet sind.

Auf der Oberseite 6 des ersten Substrats 2 sind vier Sensorchips 8 angeordnet, die in gleichen Abständen zueinander angesiedelt sind. An der Oberseite weist jeder Sensorchip 8 jeweils eine Bestrahlungsfläche 9 auf. Über jedem Sensorchip 8 sind in dem zweiten Substrat 3 integriert jeweils ein Fenster 10 vorgesehen, wobei jedes Fenster mit dem ihm zugeordneten Sensorchip 8 vertikal fluchtet. Die Fenster 10 sind in dem zweiten Substrat 3 mit der Oberseite 7 des zweiten Substrats 3 eben abschließend angeordnet.

Die Fenster 10 sind jeweils als ein Infrarotlichtfilter ausgebildet, wobei jedes der Fenster 10 Infrarotlicht bei einer unterschiedlichen Wellenlänge herausfiltert. Infrarotlicht, das durch eines der Fenster 10 hindurchtritt, tritt in den Hohlraum zwischen dem ersten Substrat 2 und dem zweiten Substrat 3 ein und trifft auf die Bestrahlungsfläche 9 des Sensorchips 8, der dem Fenster 10 zugeordnet ist. Entsprechend der Intensität des auf die Bestrahlungsfläche 9 auftreffenden Lichts spricht der Sensorchip 8 an und gibt ein elektrisches Signal ab. Dieses Signal kann in einer Auswerteschaltung (nicht gezeigt) des Infrarotlichtdetektors 1 ausgewertet werden, wodurch das durch das Fenster 10 hindurchtretende Infrarotlicht erfassbar ist.

Die Breite 11 des Fensters 10 und dessen Abstand 12 zu der Bestrahlungsfläche 9 ist derart gewählt, dass aufgrund einem Lichtstreuungseffekt das Infrarotlicht, das durch eines der Fenster 10 hindurchtritt, vollständig auf die Bestrahlungsfläche 9 des ihr zugeordneten Sensorchips 8 trifft. Dadurch wird ein diesen Sensorchip 8 benachbarter anderer Sensorchip 8 von diesem Licht nicht beschienen.

Dadurch, dass der Infrarotlichtdetektor 1 ein erstes Substrat 2 und ein zweites Substrat 3 aufweist, wobei auf dem ersten Substrat 2 die Sensorchips 8 und in dem zweiten Substrat 3 die Fenster 10 angeordnet sind sowie das erste Substrat 2 mit dem zweiten Substrat 3 gebondet mechanisch verbunden ist, hat der Infrarotlichtdetektor 1 eine kompakte Konstruktion und eine hohe Ansprechgenauigkeit der Sensorchips 8.

Die in Fig. 2 gezeigte erfindungsgemäße Ausführungsform des Infrarotlichtdetektors 1 unterscheidet sich von der in Fig. 1 gezeigten Ausführungsform des Infrarotlichtdetektors 1 dahingehend, dass die Fenster 10 nicht, wie es in Fig. 1 gezeigt ist, in dem zweiten Substrat 3 integriert, sondern auf der Oberseite 7 des zweiten Substrats 3 angeordnet sind.

Für die in Fig. 2 gezeigte Ausführungsform ist gemäß Fig. 3 das Fenster 10 als ein diffraktiv-optisches Element 13 vorgesehen. Das diffraktiv-optische Element 13 weist ein Gehäuse bestehend aus einem Boden 14, einem Deckel 15 und einer ersten Seitenwand 16 sowie einer zweiten Seitenwand 17 auf. Das Gehäuse ist aus Metall hergestellt und innen reflektierend ausgestaltet. In dem Gehäuse ist eine Dieelektrikschicht 20 angeordnet. Der Deckel 15 weist eine Eintrittsöffnung 18 und der Boden eine Austrittsöffnung 19 auf, die oberhalb des Sensorchips 8 angeordnet ist. Durch die Eintrittsöffnung 18 kann Licht 21 in das diffraktiv-optische Element 13 einfallen. Die Eintrittsöffnung 18 und die Austrittsöffnung 19 sind zueinander versetzt angeordnet, so dass bezüglich der Einfallrichtung des einfallenden Lichts 21 die Eintrittsöffnung 18 und die Austrittsöffnung 19 sich nicht überlappen. Dadurch ist der Eintrittsöffnung 18 bezüglich der Einfallrichtung des einfallenden Lichts 21 der Boden 14 gegenüberliegend angeordnet. Somit wird an dem Boden 14 der Anteil des einfallenden Lichts 21, der nicht in die Dieelektrikschicht eingekoppelt wird, reflektiert, so dass dieser Anteil durch die Eintrittsöffnung 18 wieder abgestrahlt wird. Der andere Anteil 22 des einfallenden Lichts, der in die Dieelektrikschicht 20 eingekoppelt wird, wird in der Dieelektrikschicht in Fig. 3 gesehen nach rechts 21 und links (nicht gezeigt) geleitet.

Das Gehäuse weist ferner eine erste Seitenwand 16 und eine zweite Seitenwand 17 auf, wobei die erste Seitewand 16 unmittelbar benachbart zu der Einlassöffnung 18 und die zweite Seitenwand unmittelbar benachbart zu der Auslassöffnung 19 angeordnet sind. Die zweite Seitenwand 17 ist derart geneigt angeordnet, um das eingekoppelte Licht 22 auf den Sensorchip 8 zu leiten. Die erste Seitenwand 16 ist der zweiten Seitenwand 17 gegenüberliegend angeordnet und derart geneigt, dass der Anteil des eintreffenden Lichts 21, der in der Dieelektrikschicht nach links eingekoppelt wurde, zu der zweiten Seitenwand 17 hin reflektiert wird. Dadurch wird mit dem diffraktiv-optischen Element 13 eine hohe Effizienz erzielt.

Ferner ist der Deckel 15 so angeordnet, dass von dem Deckel 15 bezüglich der Einfallrichtung des einfallenden Lichts 21 die Austrittsöffnung 19 verdeckt ist. Dadurch ist der Sensorchip vor der direkten Bestrahlung durch das einfallende Licht 21 geschützt.

### Bezugszeichenliste

- 1: Infrarotlichtdetektor
- 2: erstes Substrat
- 3: zweites Substrat
- 4: drittes Substrat
- 5: gebondete Befestigung
- 6: Oberseite des ersten Substrats
- 7: Oberseite des zweiten Substrats
- 8: Sensorchip
- 9: Bestrahlungsfläche
- 10: Fenster
- 11: Breite des Fensters
- 12: Abstand Fenster Bestrahlungsfläche
- 13: diffraktiv-optisches Element
- 14: Boden
- 15: Deckel
- 16: erste Seitenwand
- 17: zweite Seitenwand
- 18: Eintrittsöffnung
- 19: Austrittsöffnung
- 20: Dieelektrikschicht
- 21: einfallendes Licht
- 22: eingekoppeltes Licht
- 23: ausfallendes Licht
- 101: Infrarotlichtsensor
- 102: Substrat
- 103: Sensorchip
- 104: TO-Gehäuse
- 105: Filter
- 106: erster Lichtstrahl
- 107: zweiter Lichtstrahl

## Patentansprüche

1. Infrarotlichtdetektor mit einem ersten Substrat (2), das eine Mehrzahl an nebeneinander liegenden Sensorchips (8) mit jeweils einer Bestrahlungsfläche (9) aufweist, die mit Infrarotlicht bestrahlbar sind, das von den Sensorchips (8) in elektrische Signale umwandelbar ist, und einem zweiten Substrat (3), das eine Mehrzahl an Fenstern (10) aufweist, die jeweils einer der Bestrahlungsflächen (9) zugeordnet sind und unmittelbar benachbart zu der ihr zugeordneten Bestrahlungsfläche (9) angeordnet und eingerichtet sind , Infrarotlicht von einer vorbestimmten Wellenlänge auszublenden, wobei die Abmaße (11) jedes Fensters (10) und dessen Abstand (12) zur ihm zugeordneten Bestrahlungsfläche (9) derart dimensioniert sind, dass das von jedem Fenster (10) durchgelassene Infrarotlicht vollständig auf den ihm zugeordneten Sensorchip (8) trifft, wobei mindestens eines der Fenster (10) ein Infrarotlichtfilter gebildet von einem diffraktiv-optischen Element (13) ist, **gekennzeichnet dadurch, dass** das diffraktisch-optische Element eine Dielektrikschicht aufweist, in die eine Struktur geätzt ist, deren Dimension etwa ein Viertel der Wellenlänge des Lichts beträgt, die von dem diffraktiv-optischen Element gefiltert wird, wobei das diffraktiv-optische Element (13) ein die Dielektrikschicht (20) einhausendes, innen reflektierend ausgestaltetes Gehäuse (14, 15) aufweist, das an der dem Sensorchip (8) abgewandten Seite eine Eintrittsöffnung (18) und an der dem Sensorchip (8) zugewandten Seite eine Austrittsöffnung (19) aufweist, die bezogen auf die Eintrittsöffnung (18) derart versetzt angeordnet ist, dass der Anteil des durch die Eintrittsöffnung (18) eingetretenen Infrarotlichts, der nicht in die Dielektrikschicht (20) einkoppelbar ist, vollständig von dem Gehäuse (14, 15) durch die Eintrittsöffnung (18) zurück reflektierbar ist, sowie mindestens eine Seitenwand (17) aufweist, die derart geneigt angeordnet ist, dass der andere Anteil des durch die Eintrittsöffnung (18) eingetretenen Infrarotlichts, der in die Dielektrikschicht (20) einkoppelbar ist, von der mindestens einen Seitenwand (17) durch die Austrittsöffnung (19) zu dem Sensorchip (8) hin reflektierbar ist.

2. Infrarotlichtdetektor gemäß Anspruch 1, wobei jedes Fenster (10) auf der dem ersten Substrat (2) abgewandten Oberseite (7) des zweiten Substrats (3) und/oder in dem zweiten Substrat (3) integriert angeordnet ist sowie der Abstand (12) zwischen dem Fenster (10) und der Bestrahlungsfläche (9) zwischen 10 und 700 Mikrometer liegt.

3. Infrarotlichtdetektor gemäß einem der Ansprüche 1 bis 2, wobei das erste Substrat (2) und/oder das zweite Substrat (3) aus einem Silikon-Wafer und/oder einem Saphir hergestellt sind.

4. Infrarotlichtdetektor gemäß einem der Ansprüche 1 bis 3, wobei zu jedem der Sensorchips (8) jeweils dazugehörig eines der Fenster (10) ausgerichtet ist und die Sensorchips (8) und ihre Fenster (10) in einer Rasteranordnung angeordnet sind.

5. Infrarotlichtdetektor gemäß Anspruch 4, wobei die Fenster (10) eingerichtet sind Infrarotlicht von einer jeweils unterschiedlichen, vorherbestimmten Wellenlänge auszublenden.

6. Infrarotlichtdetektor gemäß einem der Ansprüche 1 bis 5, wobei das zweite Substrat (3) an das erste Substrat (2) gebondet (5) ist.

7. Infrarotlichtdetektor gemäß einem der Ansprüche 1 bis 6, wobei der Infrarotlichtdetektor (1) ein drittes Substrat (4) aufweist, das an der dem zweiten Substrat (3) abgewandten Seite des ersten Substrats (2) angeordnet ist, wobei das dritte Substrat (4) eine Auswerteschaltung zur Auswertung eines elektrischen Signals des Sensorchips (8) aufweist.

8. Infrarotlichtdetektor gemäß Anspruch 7, wobei das dritte Substrat (4) aus einem Silikon-Wafer und/oder Saphir hergestellt ist.

9. Verwendung eines Infrarotlichtdetektors gemäß einem der Ansprüche 1 bis 8 als Sensor zum Detektieren von Gas.

## Claims

1. Infrared light detector having a first substrate (2) that comprises a multitude of sensor chips (8) lying next to each other, wherein the sensor chips (8) respectively comprise an irradiation area (9) that can be irradiated with infrared light that can be converted in electrical signals by the sensor chips (8), and a second substrate (3) that comprises a multitude of windows (10) that are respectively assigned to one of the irradiation areas (9) and are arranged immediately adjacent the to the irradiation area (9) that is assigned to the window (10), wherein the windows (10) are adapted to mask infrared light of a predetermined wavelength, wherein the dimensions (11) of each window (10) and its distance (12) to the irradiation area (9) that is assigned to the window (10) are dimensioned such that the infrared light that passes through each window (10) impinges completely on the sensor chip (8) that is assigned to the window (10), wherein at least one of the windows (10) is an infrared light filter formed by a diffractive-optical element (13), **characterized in that** the diffractive-optical element comprises a dielectric layer in which a structure is etched, wherein the dimension of the structure is approximately one fourth of the wavelength of the light that is filtered by the diffractive-optical element, wherein the diffractive-optical element (13) comprises a housing (14, 15) housing the dielectric layer (20) and being formed such that it is reflecting on the inside, wherein the housing (14, 15) comprises an entry opening (18) on the side facing away the sensor chip (8) and an exit opening (19) on the side facing towards the sensor chip (8), wherein the exit opening (19) is offset with respect to the entry opening (18) such that the portion of the infrared light passing through the entry opening (18) which can not be coupled into the dielectric layer (20) can be completely back reflected from the housing (14, 15) through the entry opening (18), wherein the housing (14, 15) comprises at least one side wall (17) that is arranged inclined such that the other portion of the infrared light passing through the entry opening (18) which can be coupled into the dielectric layer (20) can be reflected through the exit opening (19) towards the sensor chip (8) by the at least one side wall (17).

2. Infrared light detector according to claim 1, wherein each window (10) is arranged integrated on the upper side (7) of the second substrate (3), wherein the upper side (7) is facing away the first substrate (2), and/or in the second substrate (3) as well as the distance (12) between the window (10) and the irradiation area (9) is between 10 and 700 micrometers.

3. Infrared light detector according to any one of claims 1 to 2, wherein the first substrate (2) and/or the second substrate (3) are made out of a silicon wafer and/or a sapphire.

4. Infrared light detector according to any one of claims 1 to 3, wherein each of the windows (10) is assigned to and aligned with a respective one of the sensor chips (8), wherein the sensor chips (8) and their windows (10) are arranged in a raster arrangement.

5. Infrared light detector according to claim 4, wherein the windows (10) are adapted to mask infrared light of a respective different, predetermined wavelength.

6. Infrared light detector according to any one of claims 1 to 5, wherein the second substrate (3) is bonded (5) to the first substrate (2).

7. Infrared light detector according to any one of claims 1 to 6, wherein the infrared light detector (1) comprises a third substrate (4) that is arranged on the side of the first substrate (2) that is facing away the second substrate (3), wherein the third substrate (4) comprises a processing circuit for processing an electrical signal of the sensor chip (8).

8. Infrared light detector according to claim 7, wherein the third substrate (4) is made out of a silicon wafer and/or sapphire.

9. Use of an infrared light detector according to any one of claims 1 to 8 as sensor for detecting gas.

## Revendications

1. Détecteur de lumière à infrarouge comprenant un premier substrat (2) comportant une surface d'exposition (9) ayant une pluralité de puces formant capteur (8) adjacentes qui sont irradiées par une lumière infrarouge, laquelle est convertie en signaux électriques par les puces formant capteur (8), et un deuxième substrat (3) comprenant une pluralité de fenêtres (10), chacune étant associée à l'une des surfaces d'exposition (9) et étant agencée et disposée à proximité immédiate de sa surface d'exposition (9) associée masquant la lumière infrarouge d'une longueur d'onde prédéterminée, dans lequel les dimensions (11) de chaque fenêtre (10) et la distance (12) à la surface d'exposition (9) associée sont déterminées de telle sorte que la lumière infrarouge qui passe au travers de chaque fenêtre (10) est transmise entièrement sur la puce formant capteur (8) associée, au moins l'une des fenêtres (10) étant un filtre de lumière infrarouge formé par un élément optique diffractant (13), **caractérisé en ce que** l'élément optique diffractant comprend une couche diélectrique, dans lequel une structure est gravée, dont la dimension est d'environ un quart de la longueur d'onde de la lumière à filtrer par l'élément optique diffractant, ledit élément optique diffractant (13) comprenant une couche diélectrique (20) et un boîtier (14, 15) réfléchissant intérieurement, le boîtier comprenant une ouverture d'entrée (18) sur un côté qui est éloigné de la puce formant capteur (8) et une ouverture de sortie (19) sur un côté faisant face à la puce formant capteur (8) par rapport à l'ouverture d'entrée (18) et est disposée de manière décalée de telle sorte que la proportion de lumière infrarouge passant au travers de l'ouverture d'entrée (18) qui n'est pas couplée à la couche diélectrique (20), est complètement réfléchie dans le boîtier (14, 15) et est renvoyée au travers de l'ouverture d'entrée (18), et comprend au moins une paroi latérale (17) qui est disposée de façon inclinée de telle sorte que l'autre partie de l'ouverture d'entrée (18) produisant une lumière infrarouge qui est couplée à la couche diélectrique (20) de ladite au moins une paroi latérale (17) est réfléchie à travers l'ouverture de sortie (19) en direction de la puce formant capteur (8).

2. Détecteur de lumière infrarouge selon la revendication 1, dans lequel chaque fenêtre (10) est aménagée sur ledit premier substrat (2) de façon opposée à la face supérieure (7) du deuxième substrat (3) et / ou est intégrée dans le deuxième substrat (3), et la distance (12) entre la fenêtre (10) et ladite surface d'exposition (9) est de 10 à 700 micromètres.

3. Détecteur de lumière infrarouge selon l'une quelconque des revendications 1 à 2, dans lequel le premier substrat (2) et / ou le deuxième substrat (3) sont constitués d'une plaquette de silicium et / ou de saphir.

4. Détecteur de lumière infrarouge selon l'une quelconque des revendications 1 à 3, dans lequel chacune des puces de capteur (8) est alignée avec l'une des fenêtres (10), et la puce formant capteur (8) et sa fenêtre (10) sont agencées selon un agencement matriciel.

5. Détecteur de lumière infrarouge selon la revendication 4, dans lequel les fenêtres (10) sont disposées pour masquer, respectivement, la lumière infrarouge d'une longueur d'onde prédéterminée.

6. Détecteur de lumière infrarouge selon l'une quelconque des revendications 1 à 5, dans lequel le deuxième substrat (3) est relié (5) au premier substrat (2).

7. Détecteur de lumière infrarouge selon l'une quelconque des revendications 1 à 6, dans lequel le détecteur de lumière infrarouge (1) comprend un troisième substrat (4) qui est disposé sur le côté dudit deuxième substrat (3) opposé au premier substrat (2), le troisième substrat (4) présentant un circuit d'évaluation pour évaluer un signal électrique de la puce formant capteur (8).

8. Détecteur de lumière infrarouge selon la revendication 7, dans lequel le troisième substrat (4) est constitué d'une plaquette de silicium et / ou de saphir.

9. Utilisation d'un détecteur de lumière infrarouge selon l'une quelconque des revendications 1 à 8 en tant que capteur pour la détection de gaz.
